# EUROPEAN PATENT SPECIFICATION

(11) **EP 1 638 247 B1**
(45) Date of publication and mention of the grant of the patent: **02.06.2010**
(21) Application number: 04738288.2
(22) Date of filing: 25.06.2004
(51) Int. Cl.: H04L 12/28, H04L 29/06

(54) **Method for transmitting traffic data to wireless local area network users**
Verfahren zum Senden von Verkehrsdaten zu Benutzern eines drahtlosen lokalen Netzwerks
Procédé de transmission de données de trafic à des utilisateurs d'un réseau local sans fil

(30) Priority: 26.06.2003 CN 03148006
(43) Date of publication of application: 22.03.2006
(73) Proprietor: Huawei Technologies Co., Ltd., Shenzhen, Guangdong Province 518129 (CN)
(72) Inventor: ZHANG, Wenlin, Shenzhen, Guangdong 518129 (CN)
(74) Representative: Körber, Martin Hans
(86) International application number: PCT/CN2004/000690
(87) International publication number: WO 2004/114588

(56) References cited:
- EP-A2- 1 180 873
- EP-A2- 1 294 163
- WO-A2-01/33770
- CN-A- 1 474 610
- US-A- 5 636 220
- 3GPP: "Technical Specification Group Services and System Aspects; Feasibility study on 3GPP system to Wireless Local Area Network (WLAN) interworking (Release 6)" 3RD GENERATION PARTNERSHIP PROJECT, December 2002 (2002-12), XP002382556
- 3GPP: "3GPP SYSTEM TO WIRELESS LOCAL AREA NETWORK (WLAN) INTERWORKING SYSTEM DESCRIPTION (RELEASE 6), DRAFT 3GPP TS 23.234 V1.10.0" 3RD GENERATION PARTNERSHIP PROJECT, [Online] May 2003 (2003-05), pages 1-75, XP002393156 Retrieved from the Internet: URL:http://www.3gpp.org/ftp/Specs/archive/ 23_series/23.234/23234-1a0.zip> [retrieved on 2006-08-01]
- PRASAD ET AL: "3G and its interworking with WLan" WLANS AND WPANS TOWARDS 4G WIRELESS, 1 March 2003 (2003-03-01), pages 25-62, XP002311889
- "Broadband radio access network (BRAN): HIPERLAN type 2: requirements and architectures for interworking between HIPERLAN/2 and 3rd generation cellular systems" ETSI TR 101 957 V1.1.1, August 2001 (2001-08), pages 1-56, XP002972086
- APOSTOLIS K SALKINTZIS ET AL: "WLAN-GPRS INTEGRATION FOR NEXT-GENERATION MOBILE DATA NETWORKS" IEEE PERSONAL COMMUNICATIONS, IEEE COMMUNICATIONS SOCIETY, US, vol. 9, no. 5, October 2002 (2002-10), pages 112-124, XP011093884 ISSN: 1070-9916

## Description

### Field of the Technology

The present invention relates to service access techniques, more particularly to a method for transmitting service data to Wireless Local Area Network (WLAN) users.

### Background of the Invention

At users' demand for an increasingly high rate of wireless access, there emerges the WLAN, which is able to provide high-rate wireless data access in a relatively small area. Various techniques have been used in WLAN, among which a technical standard with more applications is IEEE 802.11b. This standard utilizes the frequency band of 2.4GHz with a data transmission rate up to 11 Mbps. Other technical standards utilizing the same frequency band include IEEE 802.11g and Bluetooth, where the data transmission rate of IEEE 802.11g is up to 54Mbps. There are other new standards such as IEEE 802.11a and ETSI BRAN Hiperlan2, which use the frequency band of 5GHz with the transmission rate up to 54 Mbps as well.

Although there are various standards for wireless access, most WLANs are used for transferring IP data packets. The specific WLAN access standard adopted by a wireless IP network is usually transparent to the upper-level IP. Such a network is usually configured with Access Points for implementing wireless access of a user terminal and with controlling and connecting devices for implementing IP transmission.

Along with the rising and developing of WLAN, focus of research is shifting to the inter-working of WLAN with various wireless mobile communications networks, such as GSM, CDMA, WCDMA, TD-SCDMA, and CDMA2000. In accordance with the 3GPP standards, a user terminal is able to connect with Internet and Intranet as well as the home network and visited network of a 3GPP system via a WLAN access network. In 33GPP: "Technical Specification Group Services and System Aspects; Feasibility study on 3GPP system to Wireless Local Area Network (WLAN) interworking (Release 6)" and 3GPP: "3GPP system to wireless local area network (WLAN) interworking system description (RELEASE 6), 3GPP system to WLAN interworking scenarios and architectures are provided, such that the 3GPP services may be able to be offered when a WLAN is used as access network. The PRASAD ET AL: "3G and its interworking with WLAN" WLANS AND WPANS TOWARDS 4G WIRELESS, 1 March 2003 (2003-03-01), describes five possible network-layer-level architectures for interworking and handover between WLAN and UTMS without making any major changes to existing networks and technologies. In the APOSTOLIS K SALKINTZIS ET AL: "WLAN-GPRS INTEGRATION FOR NEXT-GENERATION MOBILE DATA NETWORK" IEEE PERSONAL COMMUNICATIONS, IEEE COMMUNICATIONS SOCIETY, US, vol.9, NO.5, October 2002 (2002-10), ISSN: 1070-9916, the general aspects of integrated WLANs and cellular data networks are discussed, and the generic interworking architectures that have been proposed in the technical literature are examined. And the "Broadband radio access network (BRAN): HIPERLAN type 2: requirements and architectures for interworking between HlPERLAN/2 and 3rd generation cellular systems" ETSI TR 101 957 V1.1.1, August 2001 (2001-08) describes the requirements and architectures that are applicable to interworking between High Performance Radio Local Area Network HIPERLAN/2 and 3G systems (and specifically to UMTS Release 3).

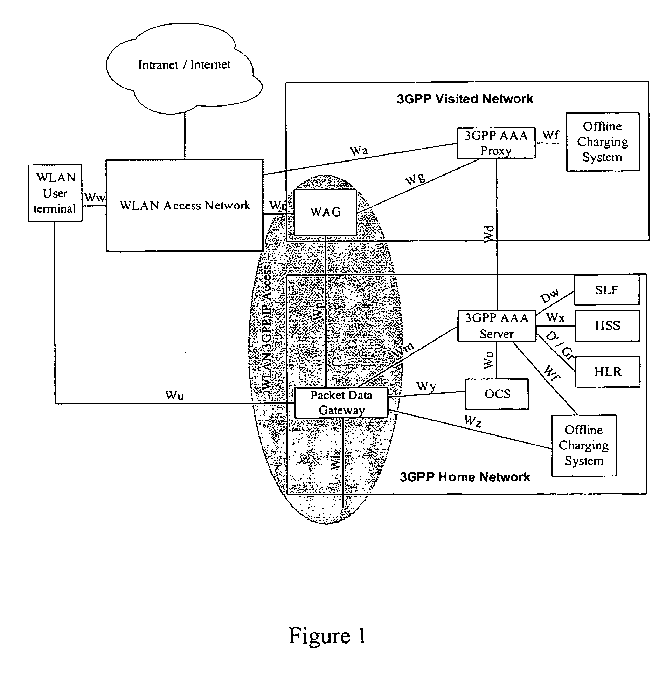

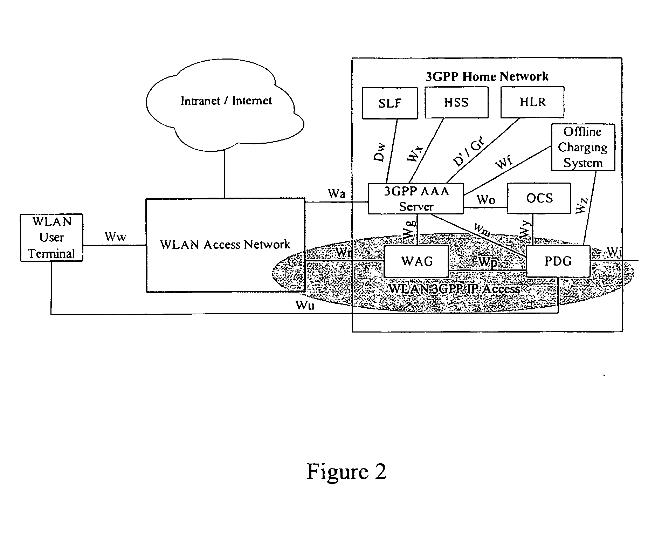

The above documents all disclose the similar contents when a WLAN user terminal wants to access the 3GPP network. Specifically, when getting accessed locally, a WLAN user terminal will get connected with the 3GPP home network via a WLAN access network, as shown in Figure 2; when roaming, it will get connected with the 3GPP visited network via a WLAN access network. Some entities of the 3GPP visited network are connected with corresponding entities of the 3GPP home network, for instance, the 3GPP Authentication, Authorization and Accounting (AAA) proxy in the visited network is connected with the 3GPP AAA Server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of a WLAN inter-working with a 3GPP system under roaming and non-roaming circumstances, respectively.

As shown in Figure 1 and Figure 2, a 3GPP system primarily comprises Home Subscriber Server (HSS)/ Home Location Register (HLR), 3GPP AAA Server, 3GPP AAA Proxy, WAG, PDG, Offline Charging System, and Online Charging System (OCS). User terminals, WLAN access network, and all the entities of the 3GPP system together constitute a 3GPP-WLAN inter-working network, which can be regarded as a WLAN service system. In this service system, 3GPP AAA Server is in charge of the authentication, authorization, and accounting of a user, collecting the charging information sent from the WLAN access network and transferring the information to the charging system; PDG is in charge of transmission of user data from the WLAN access network to the 3GPP network or other packet data networks; and the charging system mainly receives and records users' charging information transferred from the network while OCS instructs the network to transmit online charging information periodically in accordance with the expenses of the online charged users, makes statistics and conducts control.

Under non-roaming circumstances, when a WLAN user terminal desires to get accessed directly to the Internet/Intranet, the user terminal can access to Internet/Intranet via WLAN access network after it accomplishes authentication with AAA server (AS) via WLAN access network. Should the WLAN user terminal desire to get accessed to the service of 3GPP packet switched (PS) domain as well, it may further request the service of Scenario 3 from the 3GPP home network. That is, the WLAN user terminal initiates an authorization request for the service of Scenario 3 to the AS of the 3GPP home network, which will carry out service authentication and authorization for that request; if the authentication and authorization succeed, AS will send an access accept message to the terminal and assign a corresponding PDG for the terminal. When a tunnel is established between the terminal and the assigned PDG, the terminal will be able to get accessed to the service of the 3GPP PS domain. Meanwhile, Offline Charging System and OCS record the charging information in accordance with the terminal's use of the network.

Under roaming conditions, when a WLAN user terminal desires to get accessed directly to the Internet/Intranet, it may make a request to the 3GPP home network by way of the 3GPP visited network for access to the Internet/Intranet. Should the user terminal also desire to request the service of Scenario 3 to get accessed to the service of the 3GPP PS domain, the terminal needs to initiate via the 3GPP visited network a service authorization process at the 3GPP home network. The authorization is carried out likewise between the terminal and AS of the 3GPP home network. After the authorization succeeds, AS assigns an appropriate home PDG for the terminal, then the user terminal will be able to get accessed to the services of 3GPP PS domain of the home network after it establishes a tunnel with the assigned PDG via the WAG in the 3GPP visited network.

It can be seen from the above process that, after a user terminal succeeds in authorization for one or one set of service and establishes a channel, the user terminal will have a corresponding IP address and can initiate accesses to the service. At this time, the user terminal can transmit data to the related serving device of the service. Meanwhile, as the IP address of the user terminal has been registered with its routing information when the terminal gets accessed, this user terminal can also receive the data sent to it by serving devices of the service and by other user terminals related with the service.

Although the user terminal has accessed the WLAN at this time, however, it may have not yet established a channel connection with the network service or have not yet established a channel to a certain service or certain set of service when there is a service needing to send data to this user terminal. This includes two situations: one is that a user terminal has accessed the WLAN but is only connected with the local services of WLAN like accessing the local Internet/Intranet; the other is that a user terminal has accessed the WLAN and activated some services based on 3GPP PS domain but has not got accessed to the service that needs to send data to it. In the case of the above situations, there is so far no solution to notifying the user terminal to establish a connection and make relevant service interaction.

### Summary of the Invention

In view of the above, the primary objective of this invention is to provide a method for sending service data to a WLAN user such that a service access notice can be sent to the user terminal when a direct connection has not been established between the user terminal and the service to be accessed.

To achieve the above objective, the technical solution in accordance with this invention is defined by independent claim 1 and is as follows:
A method for sending service data to a WLAN user accessing a 3GPP network via a WLAN is proposed. The WLAN user terminal establishes a continuous connection with the 3GPP network as a common channel for sending a service access notice after accessing the 33GPP network, wherein the continuous connection exists after the WLAN user terminal connects with the 3GPP network until the user logs off the 3GPP network, or exists in a certain period of time and is not disconnected along with the end of a certain service;
   before a service serving unit in the 3GPP network sends data to the WLAN user terminal that has not yet established a connection with the serving unit, the service serving unit sending the service access notice to a service notification unit, and the service notification unit in the 3GPP network sends the service access notice to the WLAN user terminal via the established common channel; wherein the service access notice is used to notify the WLAN user terminal to establish a channel connection with a service provided by the service serving unit.

The method may further include:
the service notification unit querying and acquiring routing information of the common channel established, and sending the service access notice to the WLAN user terminal via the common channel established according to the routing information.

In the above solution, the WLAN user terminal establishes a continuously existing IP connection a PDG after accessing the 33GPP network, and the service notification unit acquires an address of the PDG, sends the service access notice to the PDG according to the address, and the PDG sends the service access notice to the WLAN user terminal via the continuously existing IP connection. The service notification unit, according to an identification of the WLAN user terminal, makes query of the address of the PDG in a subscription information storing unit of the 3GPP network to which the WLAN user terminal belongs, where the said identification of the WLAN user terminal may be a network access identification (NAI), or IP address, or an international mobile subscriber identification (IMSI), or a mobile station ISDN (MSISDN), or a public subscriber identification (PSI) of IP multimedia subsystem (IMS), or an identification of session initiating protocol-universal resource locator (SIP-URL).

In the above solution, the WLAN user terminal establishes a continuously existing common channel directly with the service notification unit after accessing the 3GPP network.

The method further comprises: the WLAN user terminal removing the common channel after the WLAN user terminal logs off the 3GPP network or a pre-configured time limit is expired.

In the above solution, the common channel may be an independently existing connection for information transmission, or a special service connection for notice serving that has been established between the WLAN user and the 3GPP network, the service notification unit may be a service serving unit of short message service (SMS), the service serving unit of PUSH service, or the service serving unit of Instant Messaging; and the said special notice serving service comprises SMS service, PUSH service, or Instant Messaging service.

In the above solution, the service access notice carries user handling information and service data information, or carries signaling for activating the service and the linking information of the service. Thus the method further comprises: the WLAN user terminal, after receiving the service access notice, activating the service corresponding to the service access notice based on the information carried by the service access notice, establishing a connection to the service, and obtaining service data of that service via the established connection. The method may as well further comprise: after receiving the service access notice, the WLAN user terminal choose either to activate the service corresponding to the service access notice or to reject the service in accordance with the information carried by the service access notice.

It can be seen from the above solution that the essence of this invention is that each WLAN user terminal, immediately after accessing the network, actively establishes a continuously existing connection with the network, for example, a connection with PDG or with the service notification unit, and uses this connection as the common channel to send to the destination user terminal the service access notice of the service that has not established a direct connection with the destination user terminal.

In accordance with the method provided by this invention for sending service data to WLAN users, each WLAN user terminal will actively establish a continuous connection with the network after accessing the network. This continuous connection is an IP connection inter-connecting the network devices and the user devices in a continuous time period. When a certain service needs to send data down to a WLAN user terminal but finds that no direct connection between them has been established although that user terminal has accessed the network, the service may send a service access notice, even information of service data, to the destination user terminal via the established continuous connection, notifying that user terminal to establish a connection with the service via WLAN. In this way, a solution is found to the problem that a WLAN user terminal can not learn that there is a service not connected therewith desiring to send data to the terminal.

### Brief Description of the Drawings

Figure 1 is a schematic diagram illustrating the network architecture of inter-working WLAN and 3GPP system under roaming circumstances.
Figure 2 is a schematic diagram illustrating the network architecture of inter-working WLAN and 3GPP system under non-roaming circumstances.
Figure 3 is a schematic diagram illustrating an exemplary embodiment of the structure of the 3GPP-WLAN serving network in accordance with this invention.
Figure 4 is the flowchart of Embodiment 1 implementing service notification in accordance with this invention.
Figure 5 is the flowchart of Embodiment 2 implementing service notification in accordance with this invention.
Figure 6 is the flowchart of Embodiment 3 implementing service notification in accordance with this invention.
Figure 7 is the flowchart of Embodiment 4 implementing service notification in accordance with this invention.

### Embodiments of the Invention

The core idea of this invention is: each WLAN user terminal establishes a continuously existing connection with the network immediately after accessing the network, and uses this connection as a common channel to send to the destination user terminal the service access notice of a service having established no connection with the user terminal. After receiving the information of the notice, the destination user terminal can choose either to receive or not to receive the service data. If the user terminal chooses to receive the service data, it will activate that service via the WLAN and establish a connection, then obtain the service data via the established connection.

Herein, the said continuously existing connection refers to a continuous connection existing after the user terminal connects with the network until the user logs off the network; or a continuous connection existing in a certain period of time according to the user's choice and not disconnected along with the end of a certain service. The said establishing connection with the network may comprise establishing a connection between the WLAN user terminal and PDG, or a connection directly with the service notification unit. For example, the user terminal may register the IP address assigned by the network in the service notification unit and when the service notification unit sends IP data packets according to this IP address, the packets will reach the user terminal. The PDG hereinabove may be the PDG to which that WLAN user terminal belongs or a PDG designated by the network; the service notification unit may be an independently configured network entity specially for use in sending service access notices to the network entities having established direct connections with the WLAN user terminal or the service notification module in a certain service serving unit. Should the service notification unit desire to obtain the connecting route of the common channel, it will usually make query in HLR or HSS, obtain the routing information of the common channel established for the destination user terminal, and send the service access notice based on the obtained routing; or the user may register the connecting address of the WLAN user terminal in the service notification unit when log-in.

In practical applications, it is likely that a service may find after query in the service notification unit that the destination user terminal to which the service desires to send service data has not accessed the WLAN. In this case, the service notification unit will first record the information of the service data to be sent currently and then send to the destination user terminal in two ways: one is to send actively the information of the notice or information of the service data to that destination user terminal once detecting the destination user terminal has accessed the WLAN; the other is that the destination user terminal actively makes registration in the service notification unit when accessing the WLAN such that the service notification unit will then send the information of the notice or information of the service data to the destination user terminal. Hereinafter the description in detail is given only to the situation when a WLAN user terminal has accessed the network but has established no connection with the service desiring to send data.

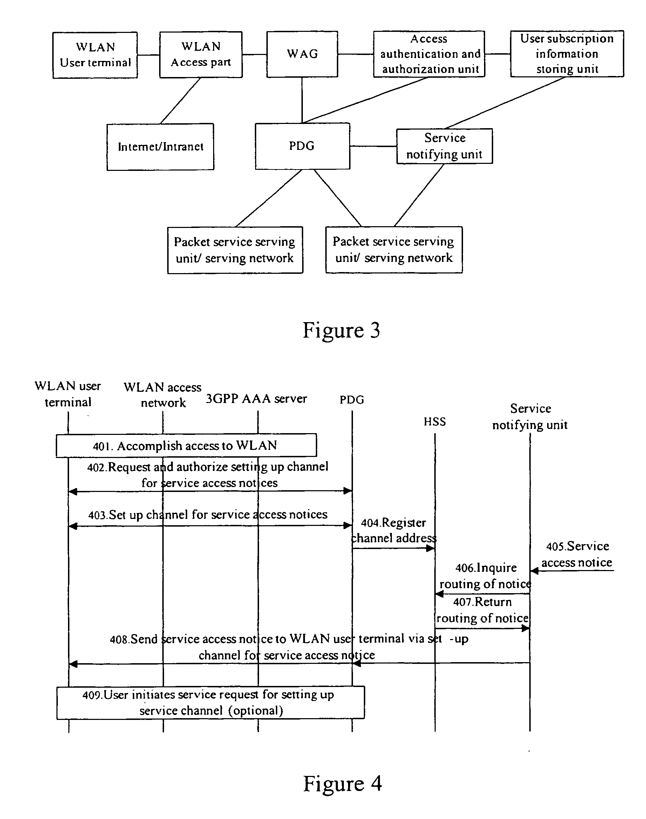

Refer to Figure 3, which is a schematic diagram illustrating an embodiment of the structure of the 3GPP-WLAN serving network adopted by this invention. In this 3GPP-WLAN serving network, the service notification unit is simultaneously connected with the user subscription information storing unit, PDG, and the packet service serving unit/serving network, where the user subscription information storing unit may be HSS or HLR, the access authentication and authorization unit may be 3GPP AS, and the service notification unit may be a certain service serving unit, for example, SMS serving unit, PUSH serving unit, or Instant Messaging service serving unit.

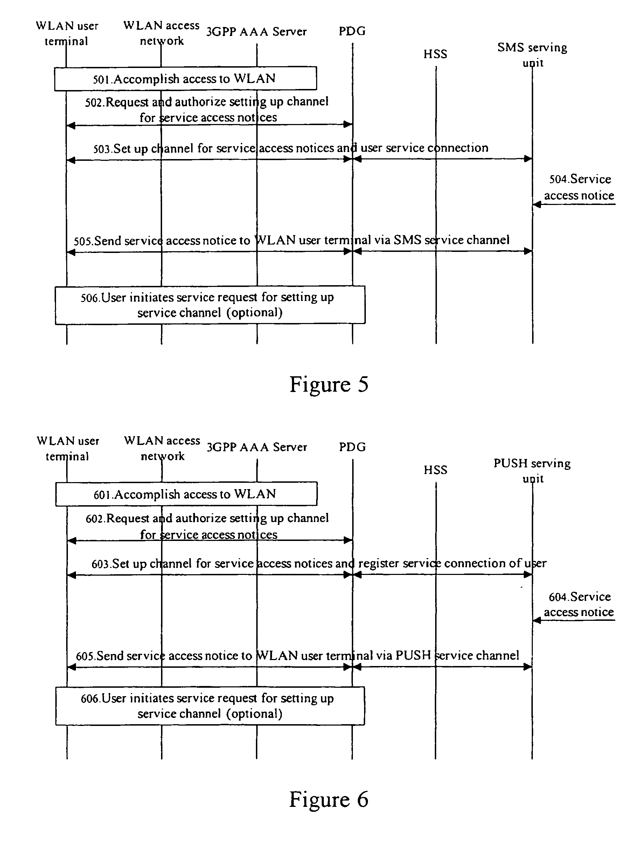

Based on the network architecture shown as Figure 3, Figure 4 to Figure 7 show specific embodiments implementing service notification in accordance with this invention, where the WLAN user terminal is the destination user terminal a service desires to access, and the service is assumed as service A in the embodiments. Embodiment 1 shown in Figure 4 is the embodiment where the WLAN user terminal establishes a common channel with PDG while Figure 5 to Figure 7 show the embodiments where the WLAN user terminal establishes a common channel directly with different service serving units, i.e. in these embodiments, a certain service serving unit is used as the service notification unit and the WLAN user terminal establishes a common channel directly with the service notification unit.

### Embodiment 1:

As shown in Figure 4, the service access notifying process in this embodiment comprises:
Steps 401~402: After accomplishing the WLAN access by interaction with 3GPP AS, the WLAN user terminal immediately sends to 3GPP AS a message requesting the establishment and authorization of a common channel for use in transmission of service access notices; after receiving the message, 3GPP AS will first decide whether there is a PDG designated by the network, if yes, send the address of the designated PDG to the WLAN user terminal currently sending the request, otherwise 3GPP AS will send to the WLAN user terminal the address of the PDG to which the WLAN user terminal currently sending the request belongs.
Steps 403~404: After obtaining the address of PDG, the WLAN user terminal establishes a common channel for transmission of service access notices with the corresponding PDG based on the address; and registers in HSS the relevant information such as the identification of the user terminal and the IP address corresponding to the common channel so that other network entities can make query. Here it is also possible for the WLAN user terminal to register at the same time directly in the service notification unit the relevant information such as the identification of the user terminal as well as the IP address corresponding to the common channel.
Step 405: When service A desires to send data to the WLAN user terminal and finds that no connection has been established with the destination user terminal when handling the transmission of the data, the serving unit of service A will first decide according to the user subscription information of that destination user terminal or according to the operating rules whether it is needed to inform the destination user terminal of the service access information, if not needed, end the transmission, otherwise the serving unit of service A will send the access notice of service A carrying the identification of the destination user terminal to the service notification unit.
   Herein, the said identification of the destination user terminal may be any permanent identification by which a user terminal can be identified in the mobile communications network, such as NAI, IP address, IMSI, MSISDN, PSI of IMS, or SIP-URL identification; the said user subscription information means that it is the user that will decide which services must be sent to the user terminal, which services are to be sent to the user terminal depending on the current demand or the current operating environment; the said operating rules refer to the principles determined by the operator as which services are to be sent to the user terminal under which circumstances. The said serving unit of service A finding no connection with the destination user terminal refers to that the serving unit of service A finds the destination user terminal has not made authorization registration in the serving unit and no relevant information has been stored in the unit, for instance, no IP address is stored or the IP address is invalid data, so the service serving unit does not believe that the user terminal can be reached.
   If the WLAN user terminal has registered the relevant information in the service notification unit after the common channel is established but the type of the user identification sent by the service serving unit is not consistent with the user identification type saved in the service notification unit, the service notification unit will have to make further query in the user subscription information storing unit of the corresponding user identification of the type consistent with the self-stored type, and then decide according to the user identification found whether the WLAN user terminal has established a common channel with the notification unit.
Steps 406-407: After receiving the access notice of service A, the service notification unit sends to HSS a route-query request which carries the identification of the destination user terminal, and makes query of the information of the connecting route of the destination user terminal based on the identification of the destination user terminal. After receiving the request, HSS will first check whether the user terminal has accessed the network, if yes, return the address of the PDG which has established a common channel with the user terminal to the service notification unit.
   If the WLAN user terminal has registered the relevant information of the common channel in the service notification unit, Steps 406 and 407 can be skipped.
Step 408: The service notification unit sends the service access notice of service A to the PDG according to the obtained address thereof, and then the PDG sends the access notice of service A to the destination user terminal via the established common channel.
   In the implementing process of the above steps, the said service access notice may comprise information to be handled by a user, for example, user information able to be displayed for a user to make decision and choice, or instruction to activate a service or linking information of a service for a user terminal to complete automatically the processes like activating the service and establishing connection with the service serving unit. The notice may as well comprise the service data to be sent by the current service to be accessed, i.e. send the service data directly to the destination user terminal via the service access notice.
Step 409 may be further comprised after step 408: After receiving the access notice of service A, the user terminal may automatically activate service A based on the information contained in the notice, then establish the service connection with the serving unit of service A after the service authentication and authorization by the network and obtain the corresponding data from the serving unit of service A. Here, the destination user terminal completes the operation of activating the service, establishing the connection and obtaining the data according to the instruction of service activation or the linking information in the service access notice. The destination user terminal may also decide to activate or reject service A according to the choice of the destination user, where the destination user makes the choice based on the displayed information in the service access notice.

### Embodiment 2:

As shown in Figure 5, in this embodiment an SMS serving unit is taken as the service notification unit, and the service access notifying process in this embodiment comprises:
Steps 501~502: basically the same as the steps 401~402 in Embodiment 1, except that it is to 3GPP AS that the WLAN user terminal makes a request for establishing an SMS service channel. After receiving the request, 3GPP AS returns the address of the service serving unit to the WLAN user terminal. The service serving unit in this embodiment is an SMS serving unit.
Step 503: After receiving the IP address of the SMS serving unit, the WLAN user terminal establishes a common channel for use in transmission of service access notices directly with the SMS serving unit via the PDG to which the user terminal belongs. After establishing the common channel, the WLAN user terminal will register the relevant information, such as the identification of the user terminal and the IP address corresponding to the common channel in the SMS serving unit.
Step 504: When service A want to send data to this WLAN user terminal, and finds that no connection has been established between itself and the destination user terminal when handling the transmission of the data, the serving unit of service A will first decide according to the user subscription information of that destination user terminal or according to the operating rules whether it is needed to inform the destination user terminal of the service access information, if not needed, end the transmission, otherwise the serving unit of service A will send the access notice of service A to the SMS serving unit. The access notice may carry the user information to be displayed for the user to make decision and choice; or carry the instruction for service activation or the linking information of service for the user terminal to complete automatically the processes such as activating the service and establishing a connection with the service serving unit. The notice may as well carry the service data of service A to be sent.
Step 505: After receiving the access notice of service A, the SMS serving unit directly sends the access notice of service A and even the information of the service data to the WLAN user terminal via the common channel established therewith.

Likewise, step 506 may be further comprised after step 505: after receiving the service access notice, the WLAN user terminal may automatically activate service A, or choose to activate service A or reject it. The specific implementing process is the same as step 409.

### Embodiment 3:

As shown in Figure 6, in this embodiment a PUSH serving unit is taken as the service notification unit, and the service access notifying process in this embodiment comprises:
Steps 601~602: basically the same as the steps 401~402 in Embodiment 1, except that it is the address of the service serving unit that 3GPP AS returns to the WLAN user terminal after receiving the request for establishing the connection. The service serving unit in this embodiment is a PUSH serving unit.
Steps 603~605: basically the same as the steps 503~505 in Embodiment 2, except that the SMS serving unit in these steps is replaced by the PUSH serving unit.

Likewise, step 606 may be further comprised after step 605: after receiving the service access notice, the WLAN user terminal may automatically activate service A, or choose to activate service A or reject it. The specific implementing process is the same as step 409.

### Embodiment 4:

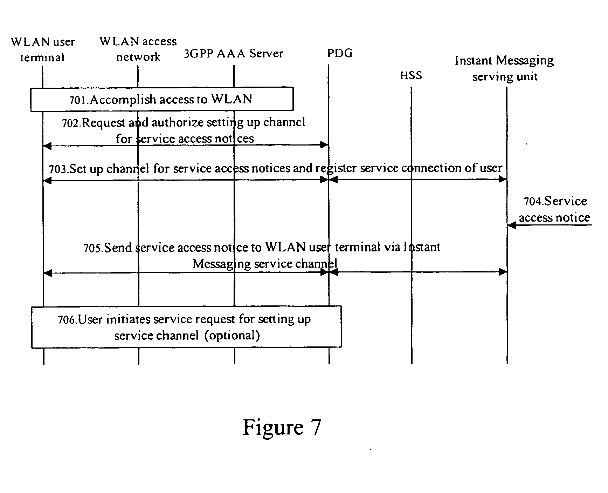

As shown in Figure 7, in this embodiment an Instant Messaging serving unit is taken as the service notification unit, and the service access notifying process in this embodiment comprises:
Steps 701~702: basically the same as the steps 401~402 in Embodiment 1, except that it is the address of the service serving unit that 3GPP AS returns to the WLAN user terminal after receiving the request for establishing the connection. The service serving unit in this embodiment is an Instant Messaging serving unit.
Steps 703~705: basically the same as the steps 503~505 in Embodiment 2, except that the SMS serving unit in the steps is replaced by the Instant Messaging serving unit.

Likewise, step 706 may be further comprised after step 705: after receiving the service access notice, the WLAN user terminal may automatically activate service A, or choose to activate service A or reject it. The specific implementing process is the same as step 409.

In Embodiment 2 to Embodiment 4, if the type of the user identification sent to the current serving unit by the service serving unit to be accessed is not consistent with the user identification type saved in the current serving unit, then the current serving unit will also have to make further query in the user subscription information storing unit for the corresponding user identification of the type consistent with the self-stored type, and then decide, based on the user identification found, whether the WLAN user terminal has established a common channel with the current serving unit.

The foregoing description is only preferred embodiments of this invention and should not be construed as limits to the protection scope thereof.

## Claims

1. A method for transmitting service data to wireless local area network, WLAN, users, the WLAN users accessing a 3GPP network via the WLAN, the method comprising:
after a WLAN user terminal accessing the 3GPP network, establishing (403, 503, 603, 703) a continuous connection between the WLAN user terminal and the 3GPP network as a common channel for sending a service access notice, wherein the continuous connection exists after the WLAN user terminal connects with the 3GPP network until the user logs off the 3GPP network, or exists in a certain period of time and is not disconnected along with the end of a certain service,
before a service serving unit in the 3GPP network transmitting data to the WLAN user terminal that has not yet established a connection with the service serving unit, the service serving unit sending (405) the service access notice to a service notification unit, and the service notification unit in the 3GPP network sending (408, 505, 605, 705) to the WLAN user terminal a service access notice via the common channel established; wherein the service access notice is used to notify the WLAN user terminal to establish a channel connection with a service provided by the service serving unit.

2. A method according to Claim 1, further comprising:
the service notification unit querying and acquiring routing information of the common channel established (406, 407), and sending the service access notice to the WLAN- user terminal via the common channel established according to the routing information (408).

3. A method according to Claim 1, wherein establishing a continuous connection between the WLAN user terminal and the 3GPP network comprises:
establishing (403) a continuously existing IP connection between the WLAN user terminal and a Packet Data Gateway, PDG, in the 3GPP network,
the service notification unit querying and acquiring routing information of the common channel established, and sending the service access notice to the WLAN user terminal via the common channel established comprises:
the service notification unit acquiring (406, 407) an address of the PDG, and sending the service access notice to the PDG according to the address, and the PDG sending the service access notice to the WLAN user terminal via the continuously existing IP connection.

4. A method according to any of Claims 1 to 2, wherein establishing a continuous connection between the WLAN user terminal and the 3GPP network comprises:
establishing (503, 603, 703) a continuously existing common channel directly between the WLAN user terminal and the service notification unit.

5. A method according to Claim 3, wherein the service notification unit acquiring an address of the PDG comprises:
the service notification unit, according to an identification of the WLAN user terminal, querying the address of the PDG from a subscription information storing unit of the 3GPP network to which the WLAN user terminal belongs.

6. A method according to Claim 5, wherein the identification of the WLAN user terminal comprises: Network Access Identification, NAI, or IP address, or International Mobile Subscriber Identification, IMSI, or Mobile Station International ISDN, MSISDN, number, or Public Subscriber Identification, PSI, of IP Multimedia Subsystem, IMS, or identification of Session Initiating Protocol-Universal Resource Locator, SIP-URL.

7. A method according to any one of Claims 1 to 6, further comprising: the WLAN user terminal releasing the common channel after the WLAN user terminal logs off the 3GPP network or a pre-configured time limit is expired.

8. A method according to any one of Claims 1 to 7, wherein the common channel is an independently existing connection for information transmission, or a connection for special notice serving service that has been established between the WLAN user terminal and the 3GPP network.

9. A method according to Claim 8, wherein the service notification unit is a service serving unit of short message service, SMS, or a serving unit of PUSH service, or a service serving unit of Instant Messaging; the said special notice serving service is an SMS service, or a PUSH service, or an Instant Messaging service.

10. A method according to any one of Claims 1 to 9, wherein the service access notice carries user handling information and service data information, or carries signaling for activating the service and linking information of the service.

11. A method according to any one of Claims 1 to 10, further comprising: the WLAN user terminal, after receiving the service access notice, activating a service corresponding to the service access notice based on information carried by the service access notice, establishing a connection to the service, and obtaining service data of the service via the connection established.

12. A method according to any one of Claims 1 to 10, further comprising: the WLAN user terminal, after receiving the service access notice, choosing either to activate a service corresponding to the service access notice or to reject the service in accordance with information carried by the service access notice.

## Patentansprüche

1. Verfahren zum Übertragen von Dienstdaten zu Benutzern eines drahtlosen lokalen Netzwerks WLAN, wobei die WLAN-Benutzer über das WLAN auf ein 3GPP-Netzwerk zugreifen, wobei das Verfahren die folgenden Schritte umfasst:
nachdem ein WLAN-Benutzerendgerät auf das 3GPP-Netzwerk zugreift, Herstellen (403, 503, 603, 703) einer kontinuierlichen Verbindung zwischen dem WLAN-Benutzerendgerät und dem 3GPP-Netzwerk als einen gemeinsamen Kanal zum Senden einer Dienstzugangsmeldung, wobei die kontinuierliche Verbindung existiert, nachdem sich das WLAN-Benutzerendgerät mit dem 3GPP-Netzwerk verbindet, bis sich der Benutzer aus dem 3GPP-Netzwerk abmeldet, oder in einem bestimmten Zeitraum existiert und zusammen mit dem Ende eines bestimmten Dienstes nicht getrennt wird,
bevor eine Dienstversorgungseinheit in dem 3GPP-Netzwerk Daten zu dem WLAN-Benutzerendgerät übertragen hat, das noch keine Verbindung mit der Dienstversorgungseinheit hergestellt hat, sendet (405) die Dienstversorgungseinheit die Dienstzugangsmeldung zu einer Dienstbenachrichtigungseinheit und die Dienstbenachrichtigungseinheit in dem 3GPP-Netzwerk sendet (408, 505, 605, 705) über den hergestellten gemeinsamen Kanal eine Dienstzugangsmeldung zu dem WLAN-Benutzerendgerät; wobei die Dienstzugangsmeldung verwendet wird, um das WLAN-Benutzerendgerät zu benachrichtigen, eine Kanalverbindung mit einem durch die Dienstversorgungseinheit bereitgestellten Dienst herzustellen.

2. Verfahren nach Anspruch 1, ferner mit den folgenden Schritten:
die Dienstbenachrichtigungseinheit erfragt und beschafft Routing-Informationen des hergestellten gemeinsamen Kanals (406, 407) und sendet die Dienstzugangsmeldung über den hergestellten gemeinsamen Kanal gemäß den Routing-Informationen (408) zu dem WLAN-Benutzerendgerät.

3. Verfahren nach Anspruch 1, wobei das Herstellen einer kontinuierlichen Verbindung zwischen dem WLAN-Benutzerendgerät und dem 3GPP-Netzwerk Folgendes umfasst:
Herstellen (403) einer kontinuierlich existierenden IP-Verbindung zwischen dem WLAN-Benutzerendgerät und einem Packet Data Gateway PDG in dem 3GPP-Netzwerk,
wobei das Erfragen und Beschaffen von Routing-Informationen des hergestellten gemeinsamen Kanals und das Senden der Dienstzugangsmeldung zu dem WLAN-Benutzerendgerät über den hergestellten gemeinsamen Kanal durch die Dienstbenachrichtigungseinheit Folgendes umfasst:
die Dienstbenachrichtigungseinheit beschafft (406, 407) eine Adresse des PDG und sendet die Dienstzugangsmeldung zu dem PDG gemäß der Adresse und das PDG sendet die Dienstzugangsmeldung über die kontinuierlich existierende IP-Verbindung zu dem WLAN-Benutzerendgerät.

4. Verfahren nach einem der Ansprüche 1 bis 2, wobei das Herstellen einer kontinuierlichen Verbindung zwischen dem WLAN-Benutzerendgerät und dem 3GPP-Netzwerk Folgendes umfasst:
Herstellen (503, 603, 703) eines kontinuierlich existierenden gemeinsamen Kanals direkt zwischen dem WLAN-Benutzerendgerät und der Dienstbenachrichtigungseinheit.

5. Verfahren nach Anspruch 3, wobei das Beschaffen einer Adresse des PDG durch die Dienstbenachrichtigungseinheit Folgendes umfasst:
die Dienstbenachrichtigungseinheit erfragt gemäß einer Identifikation des WLAN-Benutzerendgeräts die Adresse des PDG aus einer Subskriptionsinformationen-Speichereinheit des 3GPP-Netzwerks, zu dem das WLAN-Benutzerendgerät gehört.

6. Verfahren nach Anspruch 5, wobei die Identifikation des WLAN-Benutzerendgeräts Folgendes umfasst: die Network Access Identification NAI oder die IP-Adresse oder die International Mobile Subscriber Identification IMSI oder die Nummer des Mobile Station International ISDN, MSISDN oder die Public Subscriber Identification PSI des IP Multimedia Subsystem IMS oder die Identifikation des Session Initiating Protocol-Universal Resource Locator SIP-URL.

7. Verfahren nach einem der Ansprüche 1 bis 6, ferner mit dem folgenden Schritt: das WLAN-Benutzerendgerät gibt den gemeinsamen Kanal frei, nachdem sich das WLAN-Benutzerendgerät aus dem 3GPP-Netzwerk abmeldet oder eine vorkonfigurierte Zeitgrenze abgelaufen ist.

8. Verfahren nach einem der Ansprüche 1 bis 7, wobei der gemeinsame Kanal eine unabhängig existierende Verbindung für Informationsübertragung oder eine Verbindung für Spezialmeldungs-Versorgungsdienst, die zwischen dem WLAN-Benutzerendgerät und dem 3GPP-Netzwerk hergestellt wurde, ist.

9. Verfahren nach Anspruch 8, wobei die Dienstbenachrichtigungseinheit eine Dienstversorgungseinheit des Kurznachrichtendiensts SMS oder eine Versorgungseinheit des PUSH-Diensts oder eine Dienstversorgungseinheit von Instant Messaging ist; wobei der Spezialmeldungs-Versorgungsdienst ein SMS-Dienst oder ein PUSH-Dienst oder ein Dienst des Instant Messaging ist.

10. Verfahren nach einem der Ansprüche 1 bis 9, wobei die Dienstzugangsmeldung Benutzerhandhabungsinformationen und Dienstdateninformationen führt oder Signalisierung zum Aktivieren der Dienst- und Verknüpfungsinformationen des Diensts führt.

11. Verfahren nach einem der Ansprüche 1 bis 10, ferner mit den folgenden Schritten: nach dem Empfang der Dienstzugangsmeldung aktiviert das WLAN-Benutzerendgerät einen der Dienstzugangsmeldung entsprechenden Dienst auf der Basis von durch die Dienstzugangsmeldung geführten Informationen, stellt eine Verbindung zu dem Dienst her und erhält Dienstdaten des Diensts über die hergestellte Verbindung.

12. Verfahren nach einem der Ansprüche 1 bis 10, ferner mit dem folgenden Schritt: nach dem Empfang der Dienstzugangsmeldung wählt das WLAN-Benutzerendgerät gemäß durch die Dienstzugangsmeldung geführten Informationen entweder, einen der Dienstzugangsmeldung entsprechenden Dienst zu aktivieren, oder den Dienst zurückzuweisen.

## Revendications

1. Procédé de transmission de données de service à des utilisateurs d'un réseau local sans fil, WLAN, les utilisateurs WLAN accédant à un réseau 3GPP par l'intermédiaire du WLAN, le procédé comprenant :
après l'accès par un terminal utilisateur WLAN au réseau 3GPP, l'établissement (403, 503, 603, 703) d'une connexion continue entre le terminal utilisateur WLAN et le réseau 3GPP en tant que canal commun pour envoyer un avis d'accès au service, dans lequel la connexion continue existe après que le terminal utilisateur WLAN se connecte au réseau 3GPP jusqu'à ce que l'utilisateur se déconnecte du réseau 3GPP, ou existe pendant une certaine durée et n'est pas déconnectée à la fin d'un certain service,
avant la transmission par un module de prestation de service dans le réseau 3GPP de données au terminal utilisateur WLAN qui n'a pas encore établi de connexion avec le module de prestation de service, l'envoi par le module de prestation de service (405) de l'avis d'accès au service à un module de notification de service, et l'envoi par le module de notification de service dans le réseau 3GPP (408, 505, 605, 705) au terminal utilisateur WLAN d'un avis d'accès au service par l'intermédiaire du canal commun établi ; dans lequel l'avis d'accès au service sert à notifier au terminal utilisateur WLAN d'établir une connexion de canal avec un service fourni par le module de prestation de service.

2. Procédé selon la revendication 1, comprenant en outre :
l'interrogation et l'acquisition par le module de notification de service d'informations de routage du canal commun établi (406, 407), et l'envoi de l'avis d'accès au service au terminal utilisateur WLAN par l'intermédiaire du canal commun établi en fonction des informations de routage (408).

3. Procédé selon la revendication 1, dans lequel l'établissement d'une connexion continue entre le terminal utilisateur WLAN et le réseau 3GPP comprend :
l'établissement (403) d'une connexion IP existant continuellement entre le terminal utilisateur WLAN et une Passerelle de Données de Paquets, PDG, dans le réseau 3GPP ;
l'interrogation et l'acquisition par le module de notification de service d'informations de routage du canal commun établi, et l'envoi de l'avis d'accès au service au terminal utilisateur WLAN par l'intermédiaire du canal commun établi comprenant :
l'acquisition par le module de notification de service (406, 407) d'une adresse de la PDG, et l'envoi de l'avis d'accès au service à la PDG en fonction de l'adresse, et
l'envoi par la PDG de l'avis d'accès au service au terminal utilisateur WLAN, par l'intermédiaire de la connexion IP existant continuellement.

4. Procédé selon l'une quelconque des revendications 1 à 2, dans lequel l'établissement d'une connexion continue entre le terminal utilisateur WLAN et le réseau 3GPP comprend :
l'établissement (503, 603, 703) d'un canal commun existant continuellement directement entre le terminal utilisateur WLAN et le module de notification de service.

5. Procédé selon la revendication 3, dans lequel l'acquisition par le module de notification de service d'une adresse de la PDG comprend :
l'interrogation par le module de notification de service, en fonction d'une identification du terminal utilisateur WLAN, de l'adresse de la PDG à partir d'un module de mémorisation d'informations d'abonnement du réseau 3GPP auquel appartient le terminal utilisateur WLAN.

6. Procédé selon la revendication 5, dans lequel l'identification du terminal utilisateur WLAN comprend : une adresse d'Identification d'Accès au Réseau, NAI, ou une adresse IP, ou un numéro d'Identification d'Abonné Mobile International, IMSI, ou de RNIS International de Station Mobile, MSISDN, ou une Identification d'Abonné Public, PSI, d'un sous-système Multimédia IP, IMPS, ou une identification d'un Protocole de Lancement de Session - Localisateur de Ressources Universel, SIP-URL.

7. Procédé selon l'une quelconque des revendications 1 à 6, comprenant en outre la libération par le terminal utilisateur WLAN du canal commun après que le terminal utilisateur WLAN se déconnecte du réseau 3GPP ou après l'expiration d'une limite de temps préconfigurée.

8. Procédé selon l'une quelconque des revendications 1 à 7, dans lequel le canal commun est une connexion existant indépendamment pour la transmission d'informations, ou une connexion pour un service de production d'avis spéciaux qui a été établie entre le terminal utilisateur WLAN et le réseau 3GPP.

9. Procédé selon la revendication 8, dans lequel le module de notification de service est un module de prestation de service d'un service de messages courts, SMS, ou un module de prestation d'un service PUSH, ou un module de prestation de service d'une Messagerie Instantanée ; ledit service de production d'avis spéciaux est un service SMS, ou un service PUSH, ou un service de Messagerie Instantanée.

10. Procédé selon l'une quelconque des revendications 1 à 9, dans lequel l'avis d'accès au service porte des informations de gestion d'utilisateur et des informations de données de service, ou porte une signalisation pour l'activation du service et la liaison d'informations du service.

11. Procédé selon l'une quelconque des revendications 1 à 10, comprenant en outre : l'activation par le terminal utilisateur WLAN, après réception de l'avis d'accès au service, d'un service correspondant à l'avis d'accès au service d'après les informations acheminées par l'avis d'accès au service, l'établissement par le terminal utilisateur WLAN d'une connexion avec le service, et l'obtention par le terminal utilisateur WLAN de données de service du service par l'intermédiaire de la connexion établie.

12. Procédé selon l'une quelconque des revendications 1 à 10, comprenant en outre : le choix par le terminal utilisateur WLAN, après réception de l'avis d'accès au service, soit d'activer un service correspondant à l'avis d'accès au service, soit de rejeter le service en fonction des informations acheminées par l'avis d'accès au service.
